# EUROPÄISCHE PATENTSCHRIFT

(11) **EP 1 389 359 B1**
(45) Veröffentlichungstag und Bekanntmachung des Hinweises auf die Patenterteilung: **26.07.2006**
(21) Anmeldenummer: 02771622.4
(22) Anmeldetag: 02.05.2002
(51) Int. Cl.: H02M 3/156

(54) **GLEICHSPANNUNGSWANDLER MIT SCHALTREGLER**
DC-TO-DC CONVERTER COMPRISING A SWITCHING CONTROLLER
CONVERTISSEUR CONTINU-CONTINU DOTE D'UN REGULATEUR DE COMMUTATION

(30) Priorität: 23.05.2001 DE 10125334
(43) Veröffentlichungstag der Anmeldung: 18.02.2004
(73) Patentinhaber: Infineon Technologies AG, 81669 München (DE)
(72) Erfinder: BERNARDON, Derek, A-9500 Villach (AT)
(74) Vertreter: Graf Lambsdorff, Matthias
(86) Internationale Anmeldenummer: PCT/DE2002/001600
(87) Internationale Veröffentlichungsnummer: WO 2002/095916

(56) Entgegenhaltungen:
- EP-A- 1 073 187
- US-A- 5 055 767
- US-A- 5 514 947
- PATENT ABSTRACTS OF JAPAN vol. 1999, no. 14, 22. Dezember 1999 (1999-12-22) & JP 11 262248 A (TOYOTA AUTOM LOOM WORKS LTD), 24. September 1999 (1999-09-24)
- GODIL A: "HIHG CURRENT DUAL DC/DC CONVERTER OPERATES FROM 3.3V INPUT" ELECTRONIC DESIGN, PENTON PUBLISHING, CLEVELAND, OH, US, Bd. 47, Nr. 25, 6. Dezember 1999 (1999-12-06), Seiten 176A-176B, XP000945728 ISSN: 0013-4872

## Beschreibung

Die Erfindung bezieht sich auf Netzteile zur Stromversorgung. Insbesondere betrifft die Erfindung einen Gleichspannungswandler mit einem Schaltregler.

Jedes elektronische Gerät benötigt eine Stromversorgung. Die Stromversorgung muß im allgemeinen eine Gleichspannung liefern. Da bei höherem Leistungsbedarf des elektronischen Geräts Batterien unwirtschaftlich sind, wird die benötigte Gleichspannung in Netzteilen durch Transformieren und Gleichrichten einer Netzspannung erzeugt. Die so gewonnene Gleichspannung weist häufig eine beträchtliche Welligkeit auf und ändert sich zudem bei Schwankungen der Netzspannung, des Laststroms und der Temperatur. Aus diesem Grund wird in der Regel die Ausgangsspannung der Gleichrichterschaltung nicht direkt als Versorgungsspannung für elektronische Schaltkreise verwendet, sondern zuvor noch einem Spannungsregler zugeführt, welcher die Schwankungen ausregelt. Der Spannungsregler kann beispielsweise einen Regeltransistor aufweisen, welcher die Ausgangsspannung der Gleichrichterschaltung mit einer Referenzspannung vergleicht und die Ausgangsspannung des Spannungsreglers auf einen vorgegebenen Wert, welcher von der Referenzspannung abgeleitet ist, regelt.

Bei den beschriebenen Netzteilen stellen der Netztransformator, der Gleichrichter und der Regeltransistor die wesentlichen Verlustquellen für elektrische Energie dar. Der Wirkungsgrad eines derartigen Netzteils beträgt häufig nur 25% bis 50%. Die Verluste im Spannungsregler lassen sich jedoch stark reduzieren, indem der kontinuierlich geregelte Regeltransistor durch einen getakteten Schalter ersetzt wird. Die Ausgangsspannung läßt sich dann aus dem Verhältnis der Zeitintervalle bestimmen, in welchen der Schalter geöffnet bzw. geschlossen ist. Um die gewünschte Ausgangsspannung zu erhalten, wird zusätzlich ein Tiefpaßfilter benötigt, das den zeitlichen Mittelwert bildet. Sofern ein LC-Tiefpaßfilter verwendet wird, gibt es in dem sogenannten Schaltregler keine systematische Verlustquelle mehr.

Gleichspannungswandler mit Schaltreglern sind aus dem Abschnitt 16.6.2 "Erzeugung des Schaltsignals" des Buchs "Halbleiter-Schaltungstechnik" von Ulrich Tietze und Christoph Schenk, Springer-Verlag Berlin, 1999, 11. Auflage, ISBN 3-540-64192-0 bekannt. Dieser Abschnitt wird hiermit in den Offenbarungsgehalt der vorliegenden Patentanmeldung aufgenommen. Der dort beschriebene Gleichspannungswandler stellt den nächstliegenden Stand der Technik zu der vorliegenden Erfindung dar.

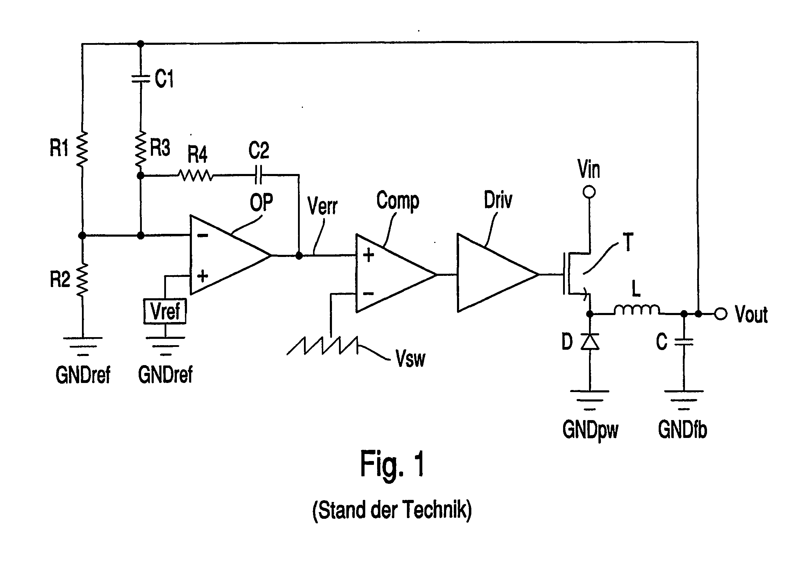

In Fig. 1 ist das Schaltbild eines derartigen bekannten Gleichspannungswandlers mit einem Schaltregler schematisch dargestellt.

Zur Gleichspannungswandlung einer Eingangsspannung Vin in eine Ausgangsspannung Vout werden als wesentliche Bauelemente eines Gleichspannungswandlers ein MOS-Transistor T, eine Diode D, eine Speicherdrossel L und ein Glättungskondensator C benötigt. Dabei ist der MOS-Transistor T ein n-Kanal-MOS-Transistor und fungiert zusammen mit der Diode D als spannungsgesteuerter Wechselschalter. Die Speicherdrossel L ist eine Spule. Die Eingangsspannung Vin liegt an dem Drainanschluß des MOS-Transistors T an. Der Sourceanschluß des MOS-Transistors T ist mit einem Anschluß der Diode D verbunden. Der andere Anschluß der Diode D liegt auf einem gemeinsamen festen Potential GNDpw. Von der Verbindung zwischen dem MOS-Transistor T und der Diode D führt eine weitere Verbindung zu dem Eingang der Speicherdrossel L. Der Ausgang der Speicherdrossel L ist mit einem Anschluß des Glättungskondensators C verbunden. An dem anderen Anschluß des Glättungskondensators C liegt ein gemeinsames festes Potential GNDfb an. An dem Ausgang der Speicherdrossel L ist die Ausgangsspannung Vout abgreifbar.

Sofern die Drain-Source-Strecke des MOS-Transistors T durch ein geeignetes Gatepotential leitend gemacht wird, liegt an der Diode D näherungsweise die Eingangsspannung Vin an, so daß die Diode D sperrt und ein Strom durch den MOS-Transistor T fließt. Falls der MOS-Transistor T gesperrt ist, fließt ein Strom durch die Diode D. Diese Schaltungsanordnung ergibt in einfacher Weise einen Wechselschalter.

Bei der vorliegenden Schaltungsanordnung fließt ständig ein Strom durch die Speicherdrossel L, welcher den Glättungskondensator C lädt. Der Wert des durch die Speicherdrossel L fließenden Stroms ändert sich mit der Zeit, seine Charakteristik wird maßgeblich von der Schaltstellung des MOS-Transistors T bestimmt. Der zeitliche Verlauf des Stroms, der durch die Speicherdrossel L fließt, läßt sich aus dem Induktionsgesetz berechnen. Aus der vorliegenden Schaltungsanordnung des Wechselschalters und der Speicherdrossel L ergibt sich ein Abwärts-Gleichspannungswandler, so daß die Ausgangsspannung Vout einen kleineren Wert als die Eingangsspannung Vin annimmt. Der Faktor, um den die Ausgangsspannung Vout kleiner als die Eingangsspannung Vin ist, ist durch die Längen der Zeitintervalle bestimmt, in welchen der MOS-Transistor T durchgeschaltet bzw. gesperrt ist. Der Glättungskondensator C glättet als Tiefpaßfilter die Ausgangsspannung Vout. Durch die Dimensionierung des Glättungskondensators C wird die Welligkeit der Ausgangsspannung Vout bestimmt.

Die Erzeugung des Schaltsignals für den MOS-Transistor T erfolgt mit einem Regler und einem Impulsbreitenmodulator. Der Regler weist einen Operationsverstärker OP auf, welcher als Proportional-Integral-Regler beschaltet ist. Das an dem Ausgang der Speicherdrossel L anliegende Ausgangssignal Vout ist zu dem invertierenden Eingang des Operationsverstärkers OP rückgekoppelt. An seinem nicht-invertierendem Eingang wird der Operationsverstärker OP von einer Referenzspannung Vref gespeist. Die Referenzspannung Vref ist auf ein gemeinsames festes Potential GNDref bezogen. Der Operationsverstärker OP ist mit Widerständen R1, R2, R3, R4 und Kondensatoren C1, C2 beschaltet. Der Operationsverstärker OP bildet die Differenz zwischen der durch die Beschaltung des Operationsverstärkers OP mit einer Gewichtung versehenen Ausgangsspannung Vout und der Referenzspannung Vref. An seinem Ausgang erzeugt der Operationsverstärker OP in Abhängigkeit von dieser Differenz eine Stellspannung Verr. Die Stellspannung Verr wirkt auf den Impulsbreitenmodulator ein und wird solange verändert, bis die Differenz an den Eingängen des Operationsverstärkers OP den Wert Null annimmt.

Der Impulsbreitenmodulator umfaßt einen Komparator Comp, der durch einen Operationsverstärker realisiert ist. Der nichtinvertierende Eingang des Komparators Comp wird von der Stellspannung Verr gespeist. An dem invertierenden Eingang des Komparators Comp liegt eine Sägezahnspannung Vsw an. Der Ausgang des Komparators Comp steuert das Gatepotential des MOS-Transistors T. Aufgrund seiner Beschaltung stellt der Komparator Comp einen Vergleich zwischen dem Wert der Stellspannung Verr und dem momentanen Wert der Sägezahnspannung Vsw an. Solange die Stellspannung Verr kleiner ist als die Sägezahnspannung Vsw, schaltet der Komparator Comp den MOS-Transistor T durch. Ansonsten ist die Drain-Source-Strecke des MOS-Transistors T gesperrt.

Um den MOS-Transistor T in den ohmschen Bereich zu bringen, ist ein Gatepotential erforderlich, welches positiv gegenüber der Eingangsspannung Vin ist. Dazu ist zwischen den Komparator Comp und den MOS-Transistor T ein MOS-Treiber Driv geschaltet. In dem MOS-Treiber Driv wird eine Hilfsspannung erzeugt, welche positiv gegenüber dem Sourcepotential des MOS-Transistors T ist.

In vielen Anwendungen werden Gleichspannungswandler mit niedrigen Rauschamplituden ihrer Ausgangssignale benötigt. Dieses gilt besonders für niedrige Frequenzen, bei denen Schaltregler häufig betrieben werden. Insbesondere die am Ausgang des Gleichspannungswandlers angeordneten Bauelemente verursachen Rauschspannungen und Rauschströme. Diese Rauschsignale beeinflussen auch andere rauschempfindliche Bauelemente des Gleichspannungswandlers. Besonders schwerwiegend können die Rauschsignale sein, wenn der Gleichspannungswandler eine hohe Dynamik aufweist. Dadurch können sub-harmonische Schwingungen erzeugt werden.

Besonders stark wirken sich Rauschsignale aus, die der Referenzspannung Vref überlagert sind. Diese Rauschsignale werden durch die Stellspannung Verr noch verstärkt und überlagern dadurch letztlich fast sämtliche Signale des Schaltkreises. Dadurch kann der Betrieb des Gleichspannungswandlers unter Umständen erheblich eingeschränkt werden.

Eine bekannte Möglichkeit, um Rauschsignale einzudämmen, besteht darin, die rauschempfindlichen Bauelemente des Gleichspannungswandlers möglichst weit entfernt von dem Ausgang des Gleichspannungswandlers anzuordnen. Diese Bauelemente werden wie in Fig. 1 gezeigt auf das gemeinsame feste Potential GNDref bezogen. Beispielsweise gilt dieses für die Eingänge des Operationsverstärkers OP. Allerdings ist die Rückkoppelungsschleife auf das gemeinsame feste Potential GNDfb bezogen und damit ebenso die am Ausgang des Operationsverstärkers OP anliegende Stellspannung Verr. Da die beiden gemeinsamen festen Potentiale GNDref und GNDfb möglichst weit auseinander liegen, um die Referenzspannung Vref rauscharm zu halten, und des weiteren hohe AC- sowie DC-Ströme zwischen den gemeinsamen festen Potentialen GNDfb, GNDpw und GNDref fließen, tritt zwischen den beiden gemeinsamen festen Potentialen GNDref und GNDfb eine nicht vernachlässigbare Potentialdifferenz auf. Diese Potentialdifferenz kann einige Zehntel Millivolt betragen und erzeugt große Rauschsignale an den Eingängen des Operationsverstärkers OP.

Eine weitere bekannte Maßnahme zur Unterdrückung der Rauschsignale sieht vor, daß das dynamische Verhalten des Gleichspannungswandlers verringert wird. Dadurch lassen sich zwar die Rauschsignale reduzieren, aber ebenso zieht diese Maßnahme eine Verschlechterung des Betriebs des Gleichspannungswandlers nach sich.

Aus der Schrift JP 11262248 ist ein Gleichspannungswandler bekannt, welcher lediglich ein gemeinsames festes Massepotential nutzt.

Aus der Schrift von Godil, "High Current Dual DC/DC-Converter", Electronic Design, Penton Publishing, Bd. 47, Nr. 25, Seite 176A ist ein Gleichspannungswandler bekannt, welcher teilweise in einem integriertem Schaltkreis verwendet wird. Zur Eingrenzung des Rauschens werden innerhalb des integrierten Schaltkreises zwei getrennte Massepotentiale verwendet.

Aufgabe der Erfindung ist es daher, einen Gleichspannungswandler zu schaffen, dessen Signale von geringen Rauschsignalen überlagert sind, wobei die Maßnahmen, die zur Verringerung der Rauschsignale ergriffen werden, den Betrieb des Gleichspannungswandlers nicht wesentlich beeinträchtigen sollen.

Die der Erfindung zugrundeliegende Aufgabenstellung wird durch den Patentanspruch 1 gelöst. Vorteilhafte Weiterbildungen und Ausgestaltungen sind in den Unteransprüchen angegeben.

Ein erfindungsgemäßer Gleichspannungswandler zur Umwandlung einer Eingangsspannung in eine Ausgangsspannung weist eine Einheit, einen Regler, einen Impulsbreitenmodulator, einen spannungsgesteuerten Wechselschalter, eine Speicherdrossel und einen Glättungskondensator auf. Die Einheit dient zur Bereitstellung einer Referenzspannung. Der Masseanschluß der Einheit ist mit einem ersten gemeinsamen festen Potential verbunden. An einem ersten Eingang des Reglers liegt eine erste Spannung, welche von der Ausgangsspannung abgeleitet ist, an. An einem zweiten Eingang des Reglers liegt eine zweite Spannung, welche von der Referenzspannung abgeleitet ist, an. Der Regler regelt die Ausgangsspannung auf einen vorgegebenen Bruchteil der Referenzspannung. Der vorgegebene Bruchteil ist beispielsweise durch die Dimensionierungen der Widerstände und Kondensatoren, mit denen der Regler beschaltet ist, bestimmt. Zur Regelung der Ausgangsspannung erzeugt der Regler an seinem Ausgang eine Stellspannung. Der Impulsbreitenmodulator vergleicht die Stellspannung mit einer Wechselspannung, welche beispielsweise eine Sägezahnspannung sein kann. Den daraus gewonnenen Vergleichswert nutzt der Impulsbreitenmodulator zur Steuerung des spannungsgesteuerten Wechselschalters. Der Wechselschalter verbindet entweder seinen ersten Eingang oder seinen zweiten Eingang mit seinem Ausgang. An dem ersten Eingang liegt die Eingangsspannung an und an dem zweiten Eingang liegt ein zweites gemeinsames festes Potential an. Der Ausgang des spannungsgesteuerten Wechselschalters ist mit dem Eingang der Speicherdrossel verbunden. An dem Ausgang der Speicherdrossel ist die Ausgangsspannung abgreifbar. Der erste Anschluß des Glättungskondensators ist mit dem Ausgang der Speicherdrossel verbunden und der zweite Anschluß des Glättungskondensators steht mit einem dritten gemeinsamen festen Potential in Verbindung. Ein wesentlicher Gedanke der Erfindung besteht darin, daß ein Referenzpotential, gegen welches die erste und die zweite Spannung abfallen, durch eine isolierte Leitung mit dem zweiten Anschluß des Glättungskondensators verbunden ist.

Erfindungsgemäß umfaßt der Gleichspannungswandler weiterhin einen Tiefpaßfilter, welcher zwischen die Einheit zur Bereitstellung der Referenzspannung und den zweiten Eingang des Reglers geschaltet ist. Der Tiefpaßfilter weist einen Kondensator auf, dessen erster Anschluß an dem zweiten Eingang des Reglers anliegt und dessen zweiter Anschluß durch die isolierte Leitung mit dem zweiten Anschluß des Glättungskondensators verbunden ist.

Der Vorteil der Erfindung ist, daß durch die erfindungsgemäße Leitung die erste und die zweite Spannung, welche die Eingangsspannungen des Reglers sind, auf das dritte gemeinsame feste Potential bezogen werden. Dadurch wirkt sich die Potentialdifferenz, die zwischen dem ersten und dem dritten gemeinsamen festen Potential besteht, nicht auf die erste und zweite Spannung aus. Da die erfindungsgemäße Leitung isoliert ist, können keine Ströme auf sie von benachbarten Bauelementen oder dem Substrat fließen. Durch die beschriebenen Eigenschaften des erfindungsgemäßen Gleichspannungswandlers werden die Rauschsignale minimiert. Dieses wurde auch experimentell bestätigt. Die durchgeführten Experimente haben gezeigt, daß durch die erfindungsgemäße Maßnahme die Rauschpegel innerhalb des gesamten Gleichspannungswandlers abnehmen und dennoch der Betrieb des Gleichspannungswandlers nicht beeinträchtigen wird. Dieses ist damit zu begründen, daß verringerte Rauschsignale der Eingangsspannungen des Reglers sich ebenfalls auf die Rauschsignale der übrigen Bauelemente, insbesondere auf die Rauschsignale der Ausgangsspannung, auswirken, da die Eingangsspannungen des Reglers unmittelbar auf das Verhalten des gesamten Gleichspannungswandlers Einfluß haben. Des weiteren zeigte sich bei den durchgeführten Experimenten, daß im gesamten Schaltkreis keine sub-harmonischen Oszillationen mehr auftreten und daß das Signal-Rausch-Verhältnis der Stellspannung fast ideale Werte aufweist.

Ein weiterer Vorteil der Erfindung besteht darin, daß die große räumliche Trennung zwischen den Bauelementen, die Rauschsignale generieren, und den rauschempfindlichen Bauelementen beibehalten werden kann. Dieses ist besonders für RF-Anwendungen essentiell.

Auch durch das erfindungsgemäße Vorsehen eines Tiefpaßfilters wird die zweite Spannung, welche von der Referenzspannung abgeleitet ist, auf das dritte gemeinsame feste Potential anstelle des ersten gemeinsamen festen Potentials bezogen. Dadurch werden die Potentialdifferenz, die ursprünglich zwischen dem Referenzpotential der zweiten Spannung und dem dritten gemeinsamen festen Potential bestand, und somit die Rauschpegel der Signale des Gleichspannungswandlers reduziert. Ferner werden durch den Tiefpaßfilter eventuelle AC-Signale, welche der Referenzspannung Vref überlagert sind, eliminiert.

Ein einfach ausgestalteter und demnach leicht zu realisierender Tiefpaßfilter enthält ferner einen Widerstand, welcher zwischen die Einheit zur Bereitstellung der Referenzspannung und den zweiten Eingang des Reglers geschaltet ist. Beispielsweise kann ein weiterer Kondensator zwischen die Einheit zur Bereitstellung der Referenzspannung und das erste gemeinsame feste Potential geschaltet werden. Dieses hat zum Vorteil, daß der Tiefpaßfilter dadurch in beide Richtungen wirkt.

Eine vorteilhafte Ausgestaltung der Erfindung ist dadurch gekennzeichnet, daß vor den ersten Eingang des Reglers ein Spannungsteiler geschaltet ist. An den Eingängen des Spannungsteilers liegen die Ausgangsspannung bzw. das dritte gemeinsame feste Potential an. Diese Maßnahme stellt eine Realisierungsmöglichkeit dar, um die erste Spannung auf das dritte gemeinsame feste Potential zu beziehen.

Gemäß einer weiteren vorteilhaften Ausgestaltung der Erfindung umfaßt der Impulsbreitenmodulator einen Komparator und einen Generator, welcher eine Sägezahnspannung generiert. Die Funktion des Komparators ist es, die Sägezahnspannung mit der Stellspannung zu vergleichen. Aus diesem Vergleich ergibt sich ein Ausgangssignal des Komparators, mit welchem sich der spannungsgesteuerte Wechselschalter steuern läßt. Des weiteren kann vorteilhafterweise vorgesehen sein, daß der spannungsgesteuerte Wechselschalter einen MOS-Transistor und eine Diode umfaßt. Der MOS-Transistor und die Diode sind derart beschaltet, daß in Abhängigkeit von dem Gatepotential des MOS-Transistors der Eingang der Speicherdrossel entweder mit der Eingangsspannung oder mit dem zweiten gemeinsamen festen Potential beaufschlagt ist.

Eine besonders bevorzugte Ausgestaltung der Erfindung sieht vor, daß der Regler und gegebenenfalls der Komparator, der Tiefpaßfilter sowie der Spannungsteiler auf einem gemeinsamen Substrat monolithisch integriert sind. Dieses erlaubt eine kostengünstige Herstellung der betreffenden Baugruppen. Ferner weist das gemeinsame Substrat einen Masseanschluß auf, an welchem der zweite Anschluß des Glättungskondensators und damit das dritte gemeinsame feste Potential anliegen können. Beispielsweise können auf dem gemeinsamen Substrat weitere rauschempfindliche Bauelemente integriert sein. Die Masseanschlüsse der rauschempfindlichen Bauelemente werden mit dem Masseanschluß des gemeinsamen Substrats verbunden. Dadurch werden Rauschsignale, welche die Signale der rauschempfindlichen Bauelemente überlagern könnten, weitgehend unterdrückt.

Vorteilhafterweise kann der zweite Anschluß des Glättungskondensators mit einem externen gemeinsamen festen Potential, insbesondere einer Masse, verbunden sein. Sofern der Gleichspannungswandler in ein Schaltkreissystem eingebunden ist, ist es vorteilhaft, sämtliche Schaltkreise des Schaltkreissystems auf ein gemeinsames festes Potential zu beziehen. Dieses verhindert Potentialdifferenzen zwischen unterschiedlichen gemeinsamen festen Potentialen, welche zu schlechten Signal-Rausch-Verhältnissen der Schaltkreise führen könnten. Des weiteren ist es vorteilhaft, wenn das gemeinsame Substrat genau eine Verbindung zu dem externen gemeinsamen festen Potential aufweist. Diese Verbindung führt über den Masseanschluß des gemeinsamen Substrats. Die genau eine Verbindung ist insofern vorteilhaft, als dadurch Masseschleifen vermieden werden, durch welche Rauschsignale generiert würden.

Eine weitere besonders bevorzugte Ausgestaltung der Erfindung ist dadurch gekennzeichnet, daß die Einheit zur Bereitstellung der Referenzspannung eine Bandabstands-Referenzschaltung ist. Das Prinzip einer Bandabstands-Referenzschaltung besteht darin, zwei Teilsignale, die ein gegenläufiges Temperaturverhalten aufweisen, zu addieren. Die beiden Teilsignale können Spannungen oder Ströme sein. Während eines der beiden Teilsignale mit zunehmender Temperatur fällt, steigt das andere Teilsignal mit zunehmender Temperatur an. Aus der Summe der beiden Teilsignale wird eine über einen gewissen Bereich temperaturunabhängige Referenzspannung abgeleitet. Ferner ist die von einer Bandabstands-Referenzschaltung erzeugte Referenzspannung weitgehend unabhängig von Schwankungen der Versorgungsspannung.

Die Erfindung wird nachfolgend unter Bezugnahme auf die Zeichnungen näher erläutert. In diesen zeigen:
- Fig. 1: ein schematisches Schaltbild eines Gleichspannungswandlers mit einem Schaltregler gemäß dem Stand der Technik; und
- Fig. 2: ein schematisches Schaltbild eines Ausführungsbeispiels des erfindungsgemäßen Gleichspannungswandlers.

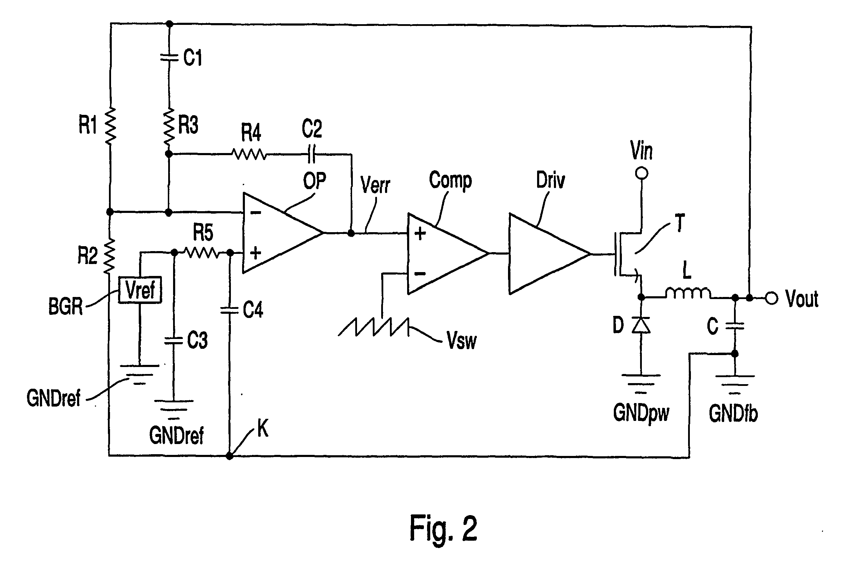

Das in Fig. 2 gezeigte Ausführungsbeispiel der Erfindung gleicht in vielen Teilen dem in Fig. 1 gezeigten Gleichspannungswandler. Unterschiede ergeben sich insbesondere bei der Beschaltung der gemeinsamen festen Potentiale GNDref und GNDfb. In dem in Fig. 2 gezeigten Ausführungsbeispiel ist zwischen eine Bandabstands-Referenzschaltung BGR, welche die Referenzspannung Vref bereitstellt, und den nicht-invertierenden Eingang des Operationsverstärkers OP ein Tiefpaßfilter geschaltet. Der Tiefpaßfilter umfaßt einen Kondensator C3, welcher zwischen die Bandabstands-Referenzschaltung BGR und das gemeinsame feste Potential GNDref geschaltet ist, und einen Widerstand R5, welcher seriell zwischen die Bandabstands-Referenzschaltung BGR und den Operationsverstärker OP geschaltet ist, sowie einen Kondensator C4, dessen einer Anschluß mit dem nicht-invertierenden Eingang des Operationsverstärkers OP verbunden ist. Eine Funktion des Tiefpaßfilters ist es, die Referenzspannung Vref auf das gemeinsame feste Potential GNDfb zu beziehen. Dazu ist der andere Anschluß des Kondensators C4 über einen Knoten K mit dem Anschluß des Glättungskondensators C verbunden, an welchem das gemeinsame feste Potential GNDfb anliegt. Der Masseanschluß der Bandabstands-Referenzschaltung BGR ist mit dem gemeinsamen festen Potential GNDref verbunden. Des weiteren ist der Widerstand R2, welcher in dem in Fig. 1 gezeigten Schaltbild mit dem gemeinsamen festen Potential GNDref verbunden ist, nun über den Knoten K mit dem gemeinsamen festen Potential GNDfb verbunden. Dadurch sind die Eingangsspannungen und die Ausgangsspannung des Operationsverstärkers OP sowie die Ausgangsspannung Vout des vorliegenden Gleichspannungswandlers auf das gemeinsame feste Potential GNDfb bezogen. Als Folge davon werden Rauschsignale weitgehend unterdrückt.

Es kann vorgesehen sein, daß der Knoten K ein Masseanschluß eines auf einem gemeinsamen Substrat monolithisch integrierten Schaltkreises ist. Der integrierte Schaltkreis könnte zum Beispiel den Operationsverstärker OP, den Komparator Comp, den MOS-Treiber Driv, den MOS-Transistor T und eventuell weitere Bauelemente enthalten. Von dem Knoten K würde eine isolierte Leitung zu dem gemeinsamen festen Potential GNDfb führen. Durch die Isolation der Leitung wird gewährleistet, daß keine unerwünschten Ströme von anderen Bauelementen oder einem Substrat auf die Leitung fließen. Diese Ströme könnten Potentialdifferenzen verursachen und dadurch Rauschsignale erzeugen.

Der integrierte Schaltkreise könnte ferner in ein System von Schaltkreisen eingebunden sein. In diesem Fall wäre es zur Reduzierung von Rauschsignalen vorteilhaft, die Masseanschlüsse aller Schaltkreise sternförmig mit einem gemeinsamen festen Potential zu verbinden.

## Patentansprüche

1. Gleichspannungswandler zur Umwandlung einer Eingangsspannung (Vin) in eine Ausgangsspannung (Vout), mit
- einer Einheit (BGR) zur Bereitstellung einer Referenzspannung (Vref), deren Masseanschluß mit einem ersten gemeinsamen festen Potential (GNDref) verbunden ist,
- einem Regler zum Regeln der Ausgangsspannung (Vout) auf einen vorgegebenen Bruchteil der Referenzspannung (Vref), wobei an einem ersten Eingang (-) des Reglers eine erste Spannung, die von der Ausgangsspannung (Vout) abgeleitet ist, anliegt, an einem zweiten Eingang (+) des Reglers eine zweite Spannung, die von der Referenzspannung (Vref) abgeleitet ist, anliegt und an einem Ausgang des Reglers eine Stellspannung (Verr) abgreifbar ist,
- einem Impulsbreitenmodulator (Comp, Vsw) zum Vergleichen der Stellspannung (Verr) mit einer Wechselspannung (Vsw),
- einem spannungsgesteuerten Wechselschalter (T, D) zum Verbinden von einem seiner zwei Eingänge mit seinem Ausgang, wobei an einem der zwei Eingänge die Eingangsspannung (Vin) anliegt und an dem anderen der zwei Eingänge ein zweites gemeinsames festes Potential (GNDpw), welches von dem ersten gemeinsamen Potential verschieden ist, anliegt und ein Steueranschluß des spannungsgesteuerten Wechselschalters (T, D) von dem Impulsbreitenmodulator (Comp, Vsw) speisbar ist,
- einer Speicherdrossel (L), deren Eingang mit dem Ausgang des spannungsgesteuerten Wechselschalters (T, D) verbunden ist und an deren Ausgang die Ausgangsspannung (Vout) abgreifbar ist, und
- einem Glättungskondensator (C), dessen erster Anschluß mit dem Ausgang der Speicherdrossel (L) und dessen zweiter Anschluß mit einem dritten gemeinsamen festen Potential (GNDfb), welches von dem ersten gemeinsamen Potential und dem zweiten gemeinsamen Potential verschieden ist, verbunden sind,
**dadurch gekennzeichnet,**
- **daß** ein Tiefpaßfilter zwischen die Einheit (BGR) zur Bereitstellung der Referenzspannung (Vref) und den zweiten Eingang (+) des Reglers geschaltet ist, wobei der Tiefpaßfilter einen Kondensator (C4) aufweist, dessen erster Anschluß an dem zweiten Eingang (+) des Reglers anliegt und dessen zweiter Anschluß durch eine isolierte Leitung mit dem zweiten Anschluß des Glättungskondensators (C) verbunden ist, und
- **daß** die erste Spannung und die zweite Spannung auf das an dem zweiten Anschluß des Kondensators (C4) anliegende Potential bezogen sind.

2. Gleichspannungswandler nach Anspruch 1,
**dadurch gekennzeichnet,**
- **daß** der Tiefpaßfilter einen Widerstand (R5), welcher zwischen die Einheit (BGR) zur Bereitstellung der Referenzspannung (Vref) und den zweiten Eingang des Reglers geschaltet ist, und insbesondere einen weiteren Kondensator (C3), welcher zwischen die Einheit (BGR) zur Bereitstellung der Referenzspannung (Vref) und das erste gemeinsame feste Potential (GNDref) geschaltet ist, umfaßt.

3. Gleichspannungswandler nach Anspruch 1 oder 2,
**dadurch gekennzeichnet,**
- **daß** dem ersten Eingang des Reglers ein Spannungsteiler (R1, R2) vorgeschaltet ist, dessen einer Eingang mit dem Ausgang der Speicherdrossel (L) verbunden ist und dessen anderer Eingang durch die isolierte Leitung mit dem zweiten Anschluß des Glättungskondensators (C) verbunden ist.

4. Gleichspannungswandler nach einem oder mehreren der vorhergehenden Ansprüche,
**dadurch gekennzeichnet,**
- **daß** der Impulsbreitenmodulator (Comp, Vsw) einen Komparator (Comp) und einen Generator zur Erzeugung einer Sägezahnspannung (Vsw) aufweist, wobei die Sägezahnspannung (Vsw) an dem ersten Eingang des Komparators (Comp) anliegt und die Stellspannung (Verr) an dem zweiten Eingang des Komparators (Comp) anliegt.

5. Gleichspannungswandler nach einem der vorhergehenden Ansprüche,
**dadurch gekennzeichnet,**
- **daß** der spannungsgesteuerte Wechselschalter (T, D) einen MOS-Transistor (T), dessen Drain-Source-Strecke von der Eingangsspannung (Vin) gespeist wird und welcher insbesondere ein n-Kanal-MOS-Transistor ist, und eine Diode (D), welche mit einem Anschluß an dem zweiten gemeinsamen festen Potential (GNDpw) anliegt, umfaßt.

6. Gleichspannungswandler nach einem der vorhergehenden Ansprüche,
**dadurch gekennzeichnet,**
- **daß** zumindest der Regler, gegebenenfalls der Komparator (Comp), gegebenenfalls der Tiefpaßfilter und gegebenenfalls der Spannungsteiler auf einem gemeinsamen Substrat monolithisch integriert sind,
wobei das gemeinsame Substrat einen Masseanschluß aufweist, welcher durch die isolierte Leitung mit dem zweiten Anschluß des Glättungskondensators (C) verbunden ist.

7. Gleichspannungswandler nach einem der vorhergehenden Ansprüche,
**dadurch gekennzeichnet,**
- **daß** der zweite Anschluß des Glättungskondensators (C) mit einem externen gemeinsamen festen Potential (GNDfb), insbesondere einer Masse, verbunden ist.

8. Gleichspannungswandler nach Anspruch 6,
**dadurch gekennzeichnet,**
- **daß** der Masseanschluss des gemeinsamen Substrats mit dem zweiten Anschluss des Glättungskondensators (C4) ausschließlich über die isolierte Leitung verbunden ist.

9. Gleichspannungswandler nach Anspruch 6 oder 8,
**dadurch gekennzeichnet,**
- **daß** auf dem gemeinsamen Substrat weitere rauschempfindliche Bauelemente integriert sind, deren Referenzpotentiale mit dem Masseanschluß des gemeinsamen Substrats verbunden sind.

10. Gleichspannungswandler nach einem der vorhergehenden Ansprüche,
**dadurch gekennzeichnet,**
- **daß** die Einheit (BGR) zur Bereitstellung der Referenzspannung (Vref) eine Bandabstands-Referenzschaltung (BGR) ist.

11. Gleichspannungswandler nach einem der Ansprüche 6 bis 10,
**dadurch gekennzeichnet,**
- **daß** zwischen den Impulsbreitenmodulator (Comp, Vsw) und den MOS-Transistor (T) ein MOS-Treiber (Driv) geschaltet ist.

12. Gleichspannungswandler nach einem der vorhergehenden Ansprüche,
**dadurch gekennzeichnet,**
- **daß** der Regler einen Operationsverstärker (OP) aufweist, welcher insbesondere als Proportional-Integral-Regler beschaltet ist.

## Claims

1. DC/DC converter for converting an input voltage (Vin) into an output voltage (Vout), said converter comprising
- a unit (BGR) which is intended to provide a reference voltage (Vref) and the earth connection of which is connected to a first common fixed potential (GNDref),
- a controller for controlling the output voltage (Vout) to a prescribed fraction of the reference voltage (Vref), a first voltage which is derived from the output voltage (Vout) being applied to a first input (-) of the controller, a second voltage which is derived from the reference voltage (Vref) being applied to a second input (+) of the controller, and it being possible to tap off an actuating voltage (Verr) at an output of the controller,
- a pulse width modulator (Comp, Vsw) for comparing the actuating voltage (Verr) with an AC voltage (Vsw),
- a voltage-controlled changeover switch (T, D) for connecting one of its two inputs to its output, the input voltage (Vin) being applied to one of the two inputs, a second common fixed potential (GNDpw) which is different from the first common potential being applied to the other one of the two inputs, and it being possible for a control connection of the voltage-controlled changeover switch (T, D) to be fed by the pulse width modulator (Comp, Vsw),
- a storage inductor (L) whose input is connected to the output of the voltage-controlled changeover switch (T, D) and at whose output the output voltage (Vout) can be tapped off, and
- a smoothing capacitor (C) whose first connection is connected to the output of the storage inductor (L) and whose second connection is connected to a third common fixed potential (GNDfb) which is different from the first common potential and the second common potential,
**characterized**
- **in that** a low-pass filter is connected between the unit (BGR) for providing the reference voltage (Vref) and the second input (+) of the controller, the low-pass filter having a capacitor (C4) whose first connection is connected to the second input (+) of the controller and whose second connection is connected to the second connection of the smoothing capacitor (C) by means of an insulated line, and
- **in that** the first voltage and the second voltage are based on the potential that is applied to the second connection of the capacitor (C4).

2. DC/DC converter according to Claim 1,
**characterized**
- **in that** the low-pass filter comprises a resistor (R5), which is connected between the unit (BGR) for providing the reference voltage (Vref) and the second input of the controller, and, in particular, a further capacitor (C3), which is connected between the unit (BGR) for providing the reference voltage (Vref) and the first common fixed potential (GNDref).

3. DC/DC converter according to Claim 1 or 2,
**characterized**
- **in that** a voltage divider (R1, R2), one of whose inputs is connected to the output of the storage inductor (L) and whose other input is connected to the second connection of the smoothing capacitor (C) by means of the insulated line, is connected upstream of the first input of the controller.

4. DC/DC converter according to one or more of the preceding claims,
**characterized**
- **in that** the pulse width modulator (Comp, Vsw) has a comparator (Comp) and a generator for generating a sawtooth voltage (Vsw), the sawtooth voltage (Vsw) being applied to the first input of the comparator (Comp) and the actuating voltage (Verr) being applied to the second input of the comparator (Comp).

5. DC/DC converter according to one of the preceding claims,
**characterized**
- **in that** the voltage-controlled changeover switch (T, D) comprises a MOS transistor (T), the drain-source path of which is fed by the input voltage (Vin) and which is, in particular, an n-channel MOS transistor, and a diode (D), one connection of which is connected to the second common fixed potential (GNDpw).

6. DC/DC converter according to one of the preceding claims,
**characterized**
- **in that** at least the controller, possibly the comparator (Comp), possibly the low-pass filter and possibly the voltage divider are monolithically integrated on a common substrate, the common substrate having an earth connection which is connected to the second connection of the smoothing capacitor (C) by means of the insulated line.

7. DC/DC converter according to one of the preceding claims,
**characterized**
- **in that** the second connection of the smoothing capacitor (C) is connected to an external common fixed potential (GNDfb), in particular earth.

8. DC/DC converter according to Claim 6,
**characterized**
- **in that** the earth connection of the common substrate is connected to the second connection of the smoothing capacitor (C4) solely by means of the insulated line.

9. DC/DC converter according to Claim 6 or 8,
**characterized**
- **in that** further noise-sensitive components whose reference potentials are connected to the earth connection of the common substrate are integrated on the common substrate.

10. DC/DC converter according to one of the preceding claims,
**characterized**
- **in that** the unit (BGR) for providing the reference voltage (Vref) is a bandgap reference circuit (BGR).

11. DC/DC converter according to one of Claims 6 to 10,
**characterized**
- **in that** a MOS driver (Driv) is connected between the pulse width modulator (Comp, Vsw) and the MOS transistor (T).

12. DC/DC converter according to one of the preceding claims,
**characterized**
- **in that** the controller has an operational amplifier (OP) which is connected as a proportional integral controller, in particular.

## Revendications

1. Convertisseur continu-continu pour la conversion d'une tension d'entrée (Vin) en une tension de sortie (Vout), avec
- une unité (BGR) pour fournir une tension de référence (Vref), dont la borne de masse est reliée à un premier potentiel fixe commun (GNDref),
- un régulateur pour réguler la tension de sortie (Vout) sur une fraction prédéterminée de la tension de référence (Vref), une première tension qui est déduite de la tension de sortie (Vout) étant appliquée à une première entrée (-) du régulateur, une deuxième tension qui est déduite de la tension de référence (Vref) étant appliquée à une deuxième entrée (+) du régulateur et une tension de réglage (Verr) pouvant être prélevée à une sortie du régulateur,
- un modulateur de largeur d'impulsion (Comp, Vsw) pour comparer la tension de réglage (Verr) à une tension alternative (Vsw),
- un commutateur inverseur commandé par tension (T, D) pour relier l'une de ses deux entrées à sa sortie, la tension d'entrée (Vin) étant appliquée à l'une des deux entrées et un deuxième potentiel fixe commun (GNDpw) différent du premier potentiel fixe commun étant appliqué à l'autre des deux entrées et une borne de commande du commutateur inverseur commandé par tension (T, D) pouvant être alimentée par le modulateur de largeur d'impulsion (Comp, Vsw),
- une self de stockage (L) dont l'entrée est reliée à la sortie du commutateur inverseur commandé par tension (T, D) et à la sortie de laquelle la tension de sortie (Vout) peut être prélevée, et
- un condensateur de lissage (C) dont la première borne est reliée à la sortie de la self de stockage (L) et dont la deuxième borne est reliée à un troisième potentiel fixe commun (GNDfb) différent du premier potentiel fixe commun et du deuxième potentiel fixe commun,
**caractérisé par le fait que**
- un filtre passe-bas est branché entre l'unité (BGR) pour la fourniture de la tension de référence (Vref) et la deuxième entrée (+) du régulateur, le filtre passe-bas comportant un condensateur (C4) dont la première borne est reliée à la deuxième entrée (+) du régulateur et dont la deuxième borne est reliée par une ligne isolée à la deuxième borne du condensateur de lissage (C), et
- la première tension et la deuxième tension sont rapportées au potentiel présent à la deuxième borne du condensateur (C4).

2. Convertisseur continu-continu selon la revendication 1,
**caractérisé par le fait que**
- le filtre passe-bas comprend une résistance (R5), qui est branchée entre l'unité (BGR) pour la fourniture de la tension de référence (Vref) et la deuxième entrée du régulateur, et notamment un autre condensateur (C3), qui est branché entre l'unité (BGR) pour la fourniture de la tension de référence (Vref) et le premier potentiel fixe commun (GNDref).

3. Convertisseur continu-continu selon la revendication 1 ou 2,
**caractérisé par le fait que**
- il est branché du côté amont de la première entrée du régulateur un diviseur de tension (R1, R2) dont une entrée est reliée à la sortie de la self de stockage (L) et dont l'autre entrée est reliée par la ligne isolée à la deuxième borne du condensateur de lissage (C).

4. Convertisseur continu-continu selon l'une ou plusieurs des revendications précédentes,
**caractérisé par le fait que**
- le modulateur de largeur d'impulsion (Comp, Vsw) comporte un comparateur (Comp) et un générateur pour la production d'une tension en dents de scie (Vsw), la tension en dents de scie (Vsw) étant appliquée à la première entrée du comparateur (Comp) et la tension de réglage (Verr) étant appliquée à la deuxième entrée du comparateur (Comp).

5. Convertisseur continu-continu selon l'une des revendications précédentes,
**caractérisé par le fait que**
- le commutateur inverseur commandé par tension (T, D) comprend un transistor MOS (T), dont la section drain-source est alimentée par la tension d'entrée (Vin) et qui est notamment un transistor MOS à canal n, et une diode (D), qui est reliée par une borne au deuxième potentiel fixe commun (GNDpw).

6. Convertisseur continu-continu selon l'une des revendications précédentes,
**caractérisé par le fait que**
- au moins le régulateur, éventuellement le comparateur (Comp), éventuellement le filtre passe-bas et éventuellement le diviseur de tension sont intégrés de façon monolithique sur un substrat commun, le substrat commun comportant une borne de masse qui est reliée par la ligne isolée à la deuxième borne du condensateur de lissage (C).

7. Convertisseur continu-continu selon l'une des revendications précédentes,
**caractérisé par le fait que**
- la deuxième borne du condensateur de lissage (C) est reliée à un potentiel fixe commun externe (GNDfb), notamment une masse.

8. Convertisseur continu-continu selon la revendication 6,
**caractérisé par le fait que**
- la borne de masse du substrat commun est reliée à la deuxième borne du condensateur de lissage (C4) exclusivement par l'intermédiaire de la ligne isolée.

9. Convertisseur continu-continu selon la revendication 6 ou 8,
**caractérisé par le fait que**
- il est intégré sur le substrat commun d'autres composants sensibles au bruit dont les potentiels de référence sont reliés à la borne de masse du substrat commun.

10. Convertisseur continu-continu selon l'une des revendications précédentes,
**caractérisé par le fait que**
- l'unité (BGR) pour la fourniture de la tension de référence (Vref) est un circuit de référence à intervalle de bande (BGR).

11. Convertisseur continu-continu selon l'une des revendications 6 à 10,
**caractérisé par le fait que**
- un circuit d'attaque MOS (Driv) est branché entre le modulateur à largeur d'impulsion (Comp, Vsw) et le transistor MOS (T).

12. Convertisseur continu-continu selon l'une des revendications précédentes,
**caractérisé par le fait que**
- le régulateur comporte un amplificateur opérationnel (OP) qui est branché notamment comme un régulateur proportionnel et intégral.
